# EUROPÄISCHE PATENTSCHRIFT

(11) **EP 3 563 442 B1**
(45) Veröffentlichungstag und Bekanntmachung des Hinweises auf die Patenterteilung: **07.02.2024**
(21) Anmeldenummer: 17818134.3
(22) Anmeldetag: 19.12.2017
(51) Int. Cl.: H01M 8/0206, H01M 8/0258, H01M 8/0254, H01M 8/241, H01M 8/2465, H01M 8/0221, H01M 8/0228, H01M 8/0267

(54) **GASVERTEILERPLATTE FÜR EINE BRENNSTOFFZELLE UND BRENNSTOFFZELLE**
GAS DISTRIBUTOR PLATE FOR A FUEL CELL AND FUEL CELL
PLAQUE DE DISTRIBUTION DES GAZ POUR PILE À COMBUSTIBLE ET PILE À COMBUSTIBLE

(30) Priorität: 29.12.2016 DE 102016226328
(43) Veröffentlichungstag der Anmeldung: 06.11.2019
(73) Patentinhaber: Robert Bosch GmbH, 70442 Stuttgart (DE)
(72) Erfinder: EIFERT, Alexander, 71292 Friolzheim (DE)
(86) Internationale Anmeldenummer: PCT/EP2017/083545
(87) Internationale Veröffentlichungsnummer: WO 2018/122040

(56) Entgegenhaltungen:
- CN-B- 103 247 807
- DE-A1-102007 025 828
- KR-B1- 100 820 519
- US-A1- 2011 183 228

## Beschreibung

Die Erfindung betrifft eine Gasverteilerplatte für eine Brennstoffzelle, welche eine erste Verteilstruktur zur Verteilung eines Brennstoffs an eine erste Elektrode und eine zweite Verteilstruktur zur Verteilung eines Oxidationsmittels an eine zweite Elektrode umfasst. Die Erfindung betrifft auch eine Brennstoffzelle, die mindestens eine erfindungsgemäße Gasverteilerplatte umfasst.

### Stand der Technik

Eine Brennstoffzelle ist eine galvanische Zelle, welche die chemische Reaktionsenergie eines kontinuierlich zugeführten Brennstoffes und eines Oxidationsmittels in elektrische Energie wandelt. Eine Brennstoffzelle ist also ein elektrochemischer Energiewandler. Bei bekannten Brennstoffzellen werden insbesondere Wasserstoff (H2) und Sauerstoff (O2) in Wasser (H2O), elektrische Energie und Wärme gewandelt.

Ein Elektrolyseur ist ein elektrochemischer Energiewandler, welcher Wasser (H2O) mittels elektrischer Energie in Wasserstoff (H2) und Sauerstoff (O2) spaltet.

Unter anderem sind Protonenaustauschmembran (Proton-Exchange-Membran = PEM) -Brennstoffzellen bekannt. Protonenaustauschmembran-Brennstoffzellen weisen eine zentral angeordnete Membran auf, die für Protonen, also für Wasserstoffionen, durchlässig ist. Das Oxidationsmittel, insbesondere Luftsauerstoff, ist dadurch räumlich von dem Brennstoff, insbesondere Wasserstoff, getrennt.

Protonenaustauschmembran-Brennstoffzellen weisen ferner eine Anode und eine Kathode auf. Der Brennstoff wird an der Anode der Brennstoffzelle zugeführt und katalytisch unter Abgabe von Elektronen zu Protonen oxidiert. Die Protonen gelangen durch die Membran zu der Kathode. Die abgegebenen Elektronen werden aus der Brennstoffzelle abgeleitet und fließen über einen externen Stromkreis zu der Kathode.

Das Oxidationsmittel wird an der Kathode der Brennstoffzelle zugeführt und es reagiert durch Aufnahme der Elektronen aus dem externen Stromkreis und Protonen, die durch die Membran zur Kathode gelangt sind, zu Wasser. Das so entstandene Wasser wird aus der Brennstoffzelle abgeleitet. Die Bruttoreaktion lautet:

O₂ + 4H⁺ + 4e⁻ → 2H₂O

Zwischen der Anode und der Kathode der Brennstoffzelle liegt dabei eine Spannung an. Zur Erhöhung der Spannung können mehrere Brennstoffzellen mechanisch hintereinander zu einem Brennstoffzellenstapel angeordnet und elektrisch in Reihe geschaltet werden.

Zur gleichmäßigen Verteilung des Brennstoffs an die Anode sowie zur gleichmäßigen Verteilung des Oxidationsmittels an die Kathode sind Gasverteilerplatten vorgesehen, welche auch als Bipolarplatten bezeichnet werden. Die Gasverteilerplatten weisen beispielsweise kanalartige Strukturen zur Verteilung des Brennstoffs sowie des Oxidationsmittels an die Elektroden auf. Die kanalartigen Strukturen diesen ferner zur Ableitung des bei der Reaktion entstandenen Wassers. Die Gasverteilerplatten können ferner Strukturen zur Durchleitung einer Kühlflüssigkeit durch die Brennstoffzelle zur Abführung von Wärme aufweisen.

Aus der DE 10 2012 221 730 A1 ist eine Brennstoffzelle mit einer gattungsgemäßen Gasverteilerplatte bekannt, welche aus zwei Plattenhälften aufgebaut ist. Dabei weist jede der beiden Plattenhälften eine Verteilstruktur auf, welche zur Verteilung der Reaktionsgase vorgesehen ist.

Auch aus der DE 10 2014 207 594 A1 ist eine Gasverteilerplatte für eine Brennstoffzelle bekannt. Die Gasverteilerplatte weist dabei einen mäanderförmigen Kanal auf, welcher beispielsweise als Nut ausgebildet ist. Der mäanderförmige Kanal dient zur Einleitung von Wasserstoff oder Sauerstoff in die Brennstoffzelle.

Die Offenlegungsschrift DE 10 2007 025828 A1 offenbart eine Gasverteilerplatte in Form von Bipolarplatten für eine Brennstoffzelle, umfassend eine erste Verteilerstruktur aus Drahtleiterbahnen zur Verteilung eines Brennstoffs an eine erste Elektrode und eine zweite Verteilerstruktur zur Verteilung eines Oxidationsmittels an eine zweite Elektrode.

US 2011/183228 A1 offenbart eine Brennstoffzelle mit Sauerstoff- und Brennstoffverteilerstrukturen, wobei mindestens eine Verteilerstruktur ein Drahtelement aufweist.

### Offenbarung der Erfindung

Es wird eine Gasverteilerplatte für eine Brennstoffzelle vorgeschlagen, welche eine erste Verteilstruktur zur Verteilung eines Brennstoffs an eine erste Elektrode und eine zweite Verteilstruktur zur Verteilung eines Oxidationsmittels an eine zweite Elektrode umfasst. Die Gasverteilplatte kann aber auch in anderen elektrochemischen Energiewandlern, beispielsweise in einem Elektrolyseur, eingesetzt werden.

Erfindungsgemäß sind in der zweiten Verteilstruktur mindestens zwei Drahtelemente vorgesehen, wobei diese Biegungen aufweisen und dadurch innerhalb der zweiten Verteilerstruktur zwischen den Drahtelementen Kanäle mit variierenden Breiten ausgebildet sind, wobei die Verteilstruktur von einer Trennplatte begrenzt ist, welche mit den Drahtelementen stoffschlüssig verbunden ist. Durch geeignete Anordnung des Drahtelements können gezielt Kanäle in der Verteilstruktur ausgebildet werden. Dadurch kann die Durchstömung der Verteilstruktur beeinflusst werden.

Vorzugsweise sind die mindestens zwei Drahtelemente dabei in der zweiten Verteilstruktur vorgesehen, welche zur Verteilung des Oxidationsmittels an die zweite Elektrode sowie zur Ableitung von bei der Reaktion entstandenem Wasser dient. Mindestens ein Drahtelement kann aber auch, alternativ oder zusätzlich, in der ersten Verteilstruktur zur Verteilung eines Brennstoffs an die erste Elektrode vorgesehen sein.

Gemäß einer vorteilhaften Ausgestaltung der Erfindung weist das Drahtelement einen runden, also kreisförmigen Querschnitt auf. Dadurch ist das Drahtelement verhältnismäßig kostengünstig und einfach zu fertigen. Aber auch andere Querschnittsformen des Drahtelements sind denkbar. Beispielsweise kann das Drahtelement auch einen ovalen, dreieckigen, viereckigen, fünfeckigen, sechseckigen oder polygonalen Querschnitt aufweisen.

Vorzugsweise ist das Drahtelement aus einem metallischen Stoff gefertigt. Somit ist das Drahtelement elektrisch leitfähig und kann die bei der elektrochemischen Reaktion in der Brennstoffzelle freigesetzten Elektronen leiten. Als mögliche Materialien für das Drahtelement bieten sich beispielsweise korrosionsbeständige Metalle wie Kupfer, Aluminium, Silber, Gold sowie Edelstahl an. Aber auch andere, vorzugsweise elektrisch Leitfähige Materialien wie Graphit oder einfacher Stahl sind denkbar.

Gemäß einer vorteilhaften Weiterbildung der Erfindung weist das Drahtelement eine nanostrukturierte und/oder mikrostrukturierte Oberfläche auf.

Die nanostrukturierte und/oder mikrostrukturierte Oberfläche beeinflusst die Benetzung der Drahtelemente mit Wasser. Somit können die Drahtelemente entweder hydrophile oder hydrophobe Eigenschaften erhalten. Dies kann anhängig von den gewünschten Prozessbedingungen den Wasserabtrag verbessern oder verlangsamen. Die Nanostrukturierung, beziehungsweise die Mikrostrukturierung kann mit unterschiedlichen gängigen Methoden erfolgen, wobei dies schon bei der Herstellung der Drahtelemente erfolgen kann. Als Beispiel werden folgende Methoden genannt: elektrochemisch (beispielsweise elektrochemische Abscheidung von dreidimensionalen Kupferstrukturen oder Metallstrukturen), Plasmaätzen, CVD, PVD, mechanisches Aufrauen, Lithographie, laserbasierte Methoden (beispielsweise Strukturierung von metallischen Stoffen mit Femtosekunden-Laserpulsen).

Zum Schutz des Drahtelements vor Korrosion, insbesondere, wenn das Drahtelement aus einem unedlen Metall wie beispielsweise Stahl gefertigt ist, kann das Drahtelement vorteilhaft mit einer Ummantelung versehen sein. Die Ummantelung enthält insbesondere einen Kunststoff, beziehungsweise ein Polymer. Um trotz der elektrisch isolierenden Ummantelung des Drahtelements eine elektrische Leitfähigkeit für die bei der elektrochemischen Reaktion in der Brennstoffzelle freigesetzten Elektronen sicherzustellen sind einige Kontaktstellen des Drahtelements mit benachbarten leitfähigen Elementen von der Ummantelung befreit. Des Weiteren kann die schützende Ummantelung derart ausgewählt werden, dass ihre elektrische Leitfähigkeit den Anforderungen genügt.

Erfindungsgemäß ist die Verteilstruktur von einer Trennplatte begrenzt, welche mit dem Drahtelement stoffschlüssig verbunden ist. Die Trennplatte ist beispielsweise als dünnes metallisches Blech ausgebildet und trennt die Verteilstruktur beispielsweise von einer benachbarten Verteilstruktur. Zur Verbindung des Drahtelements mit der Trennplatte kommen unter anderem Verfahren wie Diffusionsfügen, Schweißen, Laserschweißen, Widerstandsschweißen, Löten, Hartlöten, Weichlöten oder Sintern zur Anwendung.

Gemäß einer vorteilhaften Weiterbildung der Erfindung sind das Drahtelement und die Trennplatte mit einer gemeinsamen Beschichtung versehen. Die Beschichtung enthält insbesondere einen Kunststoff, beziehungsweise ein Polymer. Bei der Fertigung der Gasverteilplatte wird zunächst das Drahtelement mit der Trennplatte verbunden und anschließend wird die Beschichtung aufgebracht. Die Beschichtung dient insbesondere zum Schutz des Drahtelements sowie der Trennplatte vor Korrosion, insbesondere, wenn das Drahtelement und die Trennplatte aus einem unedlen Metall wie beispielsweise Stahl gefertigt sind.

Erfindungsgemäß weist das Drahtelement mindestens eine Biegung auf. Durch entsprechende Anordnung des Drahtelements mit geeigneten Biegungen können innerhalb der Verteilstruktur Kanäle mit variierenden Breiten ausgebildet werden. Dadurch ergeben sich beim Durchströmen des Oxidationsmittels Druckdifferenzen in der Verteilstruktur und somit auch variierende Strömungsgeschwindigkeiten. Damit wird die Durchmischung innerhalb der Verteilstruktur verbessert.

Gemäß einer vorteilhaften Weiterbildung der Erfindung sind mindestens zwei Drahtelemente in der Verteilstruktur vorgesehen, welche in zueinander geneigten Richtungen verlaufen. Beispielsweise sind die Drahtelemente übereinander geschichtet und verlaufen rechtwinklig zueinander. Durch eine derartige Anordnung von zwei oder mehreren Drahtelementen können Porositäten in der Verteilstruktur geschaffen werden.

Es wird auch eine Brennstoffzelle vorgeschlagen, die mindestens eine Membran-Elektrodeneinheit mit einer ersten Elektrode und einer zweiten Elektrode, welche voneinander durch eine Membran getrennt sind, und mindestens eine erfindungsgemäße Gasverteilerplatte umfasst. Insbesondere ist die Brennstoffzelle derart aufgebaut, dass sich beidseitig an die Membran-Elektrodeneinheit jeweils eine Gasverteilerplatte anschließt.

### Vorteile der Erfindung

Die erfindungsgemäße Ausgestaltung der Gasverteilerplatte ermöglicht eine flexible Gestaltung der Verteilstruktur. Das Drahtelement kann in unterschiedlichsten Ausführungen gelegt werden und somit Kanäle mit unterschiedlichsten Geometrien bilden. Das Drahtelement kann aus unterschiedlichsten Materialien gefertigt sein. Das Drahtelement kann beschichtet, gecoated, ummantelt, oder koaxial in unterschiedliche Materialien eingebettet sein. Bei einer Anordnung mehrerer Drahtelemente übereinander können auch poröse Strukturen in der Gasverteilerplatte erzeugt werden. Durch entsprechende Variierung der Geometrie der Kanäle oder des Drahtelements können Gasdurchfluss sowie Wasserabfluss und Wasserkondensation gesteuert werden. Insbesondere können Erkenntnisse, die bei entsprechenden Simulationen gewonnen werden, verhältnismäßig schnell und einfach zur praktischen Erprobung umgesetzt werden
Durch entsprechende Bearbeitung der Oberflächen des Drahtelements können unter anderem die Benetzungseigenschaften des Drahtelements beeinflusst werden. Ferner können hydrophobe Eigenschaften der Verteilstruktur mittels der Ummantelung des Drahtelements eingestellt werden. Auch ist es denkbar, bei der Fertigung der Brennstoffzelle oder eines Brennstoffzellenstapels mit mehreren Brennstoffzellen das Drahtelement durch Anpressen kraftschlüssig in der Verteilstruktur zu halten. Eine zusätzliche Verbindung, beispielsweise durch Schweißen, kann dabei entfallen.

### Kurze Beschreibung der Zeichnungen

Ausführungsformen der Erfindung werden anhand der Zeichnungen und der nachfolgenden Beschreibung näher erläutert.

Es zeigen:
- Figur 1: eine schematische Darstellung eines Brennstoffzellenstapels mit mehreren Brennstoffzellen,
- Figur 2: eine Verteilstruktur einer Gasverteilerplatte gemäß einer ersten Ausführungsform,
- Figur 3: eine Verteilstruktur einer Gasverteilerplatte gemäß einer zweiten Ausführungsform,
- Figur 4: eine Verteilstruktur einer Gasverteilerplatte gemäß einer dritten Ausführungsform,
- Figur 5: eine Verteilstruktur einer Gasverteilerplatte gemäß einer vierten Ausführungsform,
- Figur 6: eine Verteilstruktur einer Gasverteilerplatte gemäß einer fünften Ausführungsform und
- Figur 7: eine Verteilstruktur einer Gasverteilerplatte gemäß einer erfindungsgemäßen sechsten Ausführungsform.

### Ausführungsformen der Erfindung

In der nachfolgenden Beschreibung der Ausführungsformen der Erfindung werden gleiche oder ähnliche Elemente mit gleichen Bezugszeichen bezeichnet, wobei auf eine wiederholte Beschreibung dieser Elemente in Einzelfällen verzichtet wird. Die Figuren stellen den Gegenstand der Erfindung nur schematisch dar.

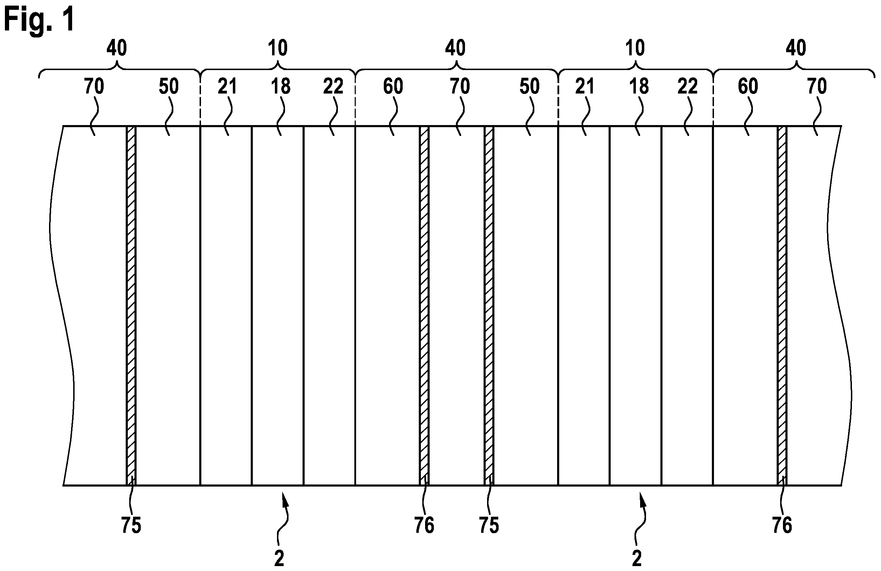

Figur 1 zeigt eine schematische Darstellung eines Brennstoffzellenstapels mit mehreren Brennstoffzellen 2. Jede Brennstoffzelle 2 weist eine Membran-Elektrodeneinheit 10 auf, die eine erste Elektrode 21, eine zweite Elektrode 22 und eine Membran 18 umfasst. Die beiden Elektroden 21, 22 sind auf einander gegenüber liegenden Seiten der Membran 18 angeordnet und somit voneinander durch die Membran 18 getrennt. Die erste Elektrode 21 wird im Folgenden auch als Anode 21 bezeichnet und die zweite Elektrode 22 wird im Folgenden auch als Kathode 22 bezeichnet. Die Membran 18 ist als Polymerelektrolytmembran ausgebildet. Die Membran 18 ist für Wasserstoffionen, also H⁺-Ionen, durchlässig.

Jede Brennstoffzelle 2 weist ferner zwei Gasverteilerplatten 40 auf, die sich beidseitig an die Membran-Elektrodeneinheit 10 anschließen. Bei der hier gezeigten Anordnung mehrerer Brennstoffzellen 2 in einem Brennstoffzellenstapel kann jede der Gasverteilerplatten 40 als zu zwei zueinander benachbart angeordneten Brennstoffzellen 2 gehörig betrachtet werden.

Die Gasverteilerplatten 40 umfassen jeweils eine erste Verteilstruktur 50 zur Verteilung eines Brennstoffs, die der Anode 21 zugewandt ist. Die Gasverteilerplatten 40 umfassen jeweils auch eine zweite Verteilstruktur 60 zur Verteilung des Oxidationsmittels, die der Kathode 22 zugewandt ist. Die zweite Verteilstruktur 60 dient gleichzeitig zur Ableitung von bei einer Reaktion in der Brennstoffzelle 2 entstandenem Wasser.

Die Gasverteilerplatten 40 umfassen ferner eine dritte Verteilstruktur 70, welche zwischen der ersten Verteilstruktur 50 und der zweiten Verteilstruktur 60 angeordnet ist. Die dritte Verteilstruktur 70 dient zur Durchleitung eines Kühlmittels durch die Gasverteilerplatte 40 und damit zur Kühlung der Brennstoffzelle 2.

Die erste Verteilstruktur 50 und die dritte Verteilstruktur 70 sind durch eine erste Trennplatte 75 voneinander getrennt. Die zweite Verteilstruktur 60 und die dritte Verteilstruktur 70 sind durch eine zweite Trennplatte 76 voneinander getrennt. Die Trennplatten 75, 76 der Gasverteilerplatten 40 sind vorliegend als dünne metallische Bleche ausgebildet.

Im Betrieb der Brennstoffzelle 2 wird Brennstoff über die erste Verteilstruktur 50 zu der Anode 21 geleitet. Ebenso wird Oxidationsmittel über die zweite Verteilstruktur 60 zu der Kathode 22 geleitet. Der Brennstoff, vorliegend Wasserstoff, wird an der Anode 21 katalytisch unter Abgabe von Elektronen zu Protonen oxidiert. Die Protonen gelangen durch die Membran 18 zu der Kathode 22. Die abgegebenen Elektronen werden aus der Brennstoffzelle 2 abgeleitet und fließen über einen externen Stromkreis zu der Kathode 22. Das Oxidationsmittel, vorliegend Luftsauerstoff, reagiert durch Aufnahme der Elektronen aus dem externen Stromkreis und Protonen, die durch die Membran 18 zu der Kathode 22 gelangt sind, zu Wasser.

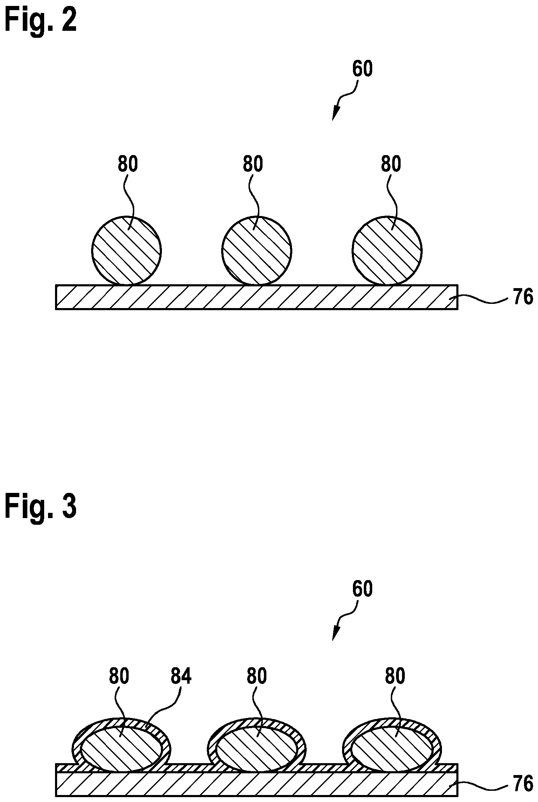

Figur 2 zeigt eine zweite Verteilstruktur 60 einer Gasverteilerplatte 40 gemäß einer ersten Ausführungsform. In der zweiten Verteilstruktur 60, die von einer zweiten Trennplatte 76 begrenzt ist, sind mehrere, vorliegend drei, Drahtelemente 80 vorgesehen.

Die Drahtelemente 80 weisen vorliegend einen runden Querschnitt auf. Die Drahtelemente 80 sind aus einem Metall, vorliegend Aluminium, gefertigt. Dabei sind die Drahtelemente 80 stoffschlüssig mit der zweiten Trennplatte 76 verbunden.

Figur 3 zeigt eine zweite Verteilstruktur 60 einer Gasverteilerplatte 40 gemäß einer zweiten Ausführungsform. In der zweiten Verteilstruktur 60, die von einer zweiten Trennplatte 76 begrenzt ist, sind mehrere, vorliegend drei, Drahtelemente 80 vorgesehen.

Die Drahtelemente 80 weisen vorliegend einen ovalen Querschnitt auf. Die Drahtelemente 80 sind aus einem Metall, vorliegend Stahl, gefertigt. Dabei sind die Drahtelemente 80 stoffschlüssig mit der zweiten Trennplatte 76 verbunden. Die Drahtelemente 80 und die zweite Trennplatte 76 sind mit einer gemeinsamen Beschichtung 84 versehen. Die Beschichtung 84 enthält ein Polymer und dient zum Schutz der Drahtelemente 80 sowie der zweiten Trennplatte 76 vor Korrosion.

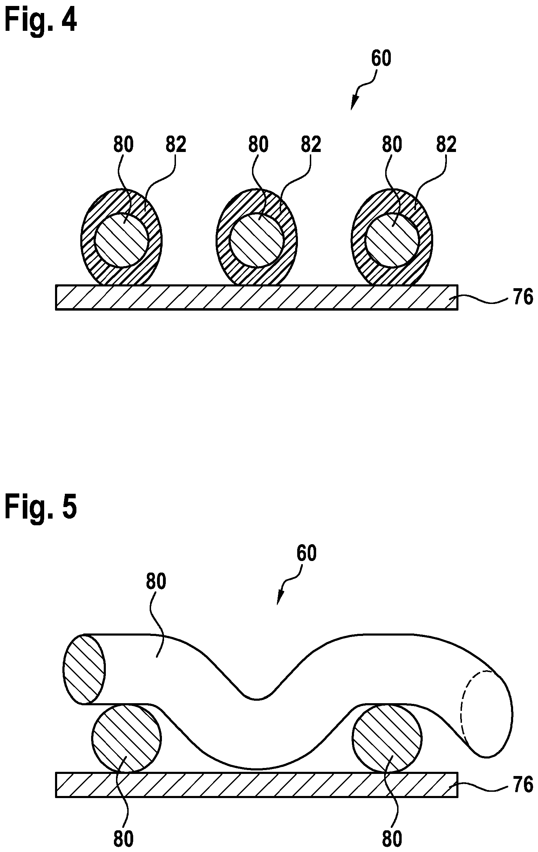

Figur 4 zeigt eine zweite Verteilstruktur 60 einer Gasverteilerplatte 40 gemäß einer dritten Ausführungsform. In der zweiten Verteilstruktur 60, die von einer zweiten Trennplatte 76 begrenzt ist, sind mehrere, vorliegend drei, Drahtelemente 80 vorgesehen.

Die Drahtelemente 80 weisen vorliegend einen runden Querschnitt auf. Die Drahtelemente 80 sind aus einem Metall, vorliegend Stahl, gefertigt. Dabei sind die Drahtelemente 80 jeweils mit einer Ummantelung 82 versehen. Die Ummantelung 82 enthält ein Polymer und dient zum Schutz der Drahtelemente 80 vor Korrosion. Die Drahtelemente 80 weisen hier nicht sichtbare Kontaktstellen auf, welche frei von der Ummantelung 82 sind. An den Kontaktstellen sind die Drahtelemente 80 stoffschlüssig mit der zweiten Trennplatte 76 verbunden.

Figur 5 zeigt eine zweite Verteilstruktur 60 einer Gasverteilerplatte 40 gemäß einer vierten Ausführungsform. In der zweiten Verteilstruktur 60, die von einer zweiten Trennplatte 76 begrenzt ist, sind mehrere Drahtelemente 80 vorgesehen, wobei in der gezeigten Darstellung drei Drahtelemente 80 sichtbar sind.

Dabei verlaufen zwei Drahtelemente 80, welche unmittelbar auf der zweiten Trennplatte 76 aufliegen, parallel zueinander. Weitere Drahtelemente 80 liegen auf den beiden Drahtelemente 80 auf, die unmittelbar auf der zweiten Trennplatte 76 aufliegen, und verlaufen rechtwinklig zu diesen. Die Drahtelemente 80, welche auf den anderen Drahtelementen 80 aufliegen, sind dabei gekrümmt und nähern sich in Zwischenräumen zwischen den anderen Drahtelementen 80 der zweiten Trennplatte 76 an.

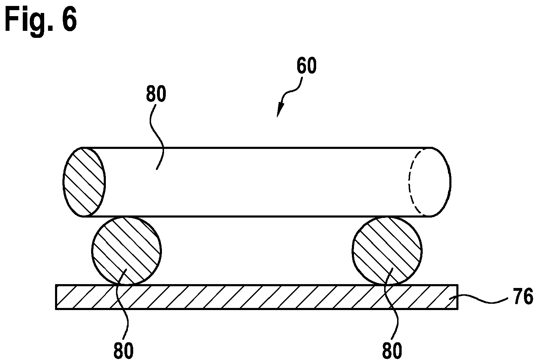

Figur 6 zeigt eine zweite Verteilstruktur 60 einer Gasverteilerplatte 40 gemäß einer fünften Ausführungsform. In der zweiten Verteilstruktur 60, die von einer zweiten Trennplatte 76 begrenzt ist, sind mehrere Drahtelemente 80 vorgesehen, wobei in der gezeigten Darstellung drei Drahtelemente 80 sichtbar sind.

Dabei verlaufen zwei Drahtelemente 80, welche unmittelbar auf der zweiten Trennplatte 76 aufliegen, parallel zueinander. Weitere Drahtelemente 80 liegen auf den beiden Drahtelemente 80 auf, die unmittelbar auf der zweiten Trennplatte 76 aufliegen, und verlaufen rechtwinklig zu diesen. Die Drahtelemente 80, welche auf den anderen Drahtelementen 80 aufliegen, verlaufen vorliegend gerade und parallel zueinander. Die Drahtelemente 80, welche auf den anderen Drahtelementen 80 aufliegen, haben somit einen gleichbleibenden Abstand zu der zweiten Trennplatte 76.

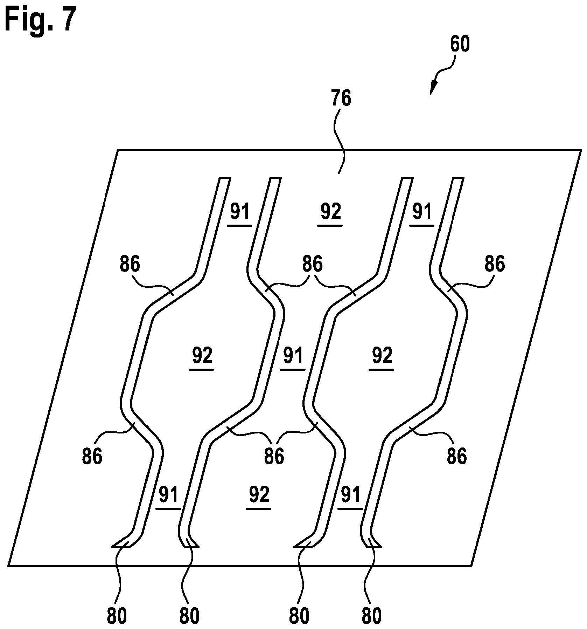

Figur 7 zeigt eine zweite Verteilstruktur 60 einer Gasverteilerplatte 40 gemäß einer erfindungsgemäßen sechsten Ausführungsform. In der zweiten Verteilstruktur 60, die von einer zweiten Trennplatte 76 begrenzt ist, sind mehrere, vorliegend vier, Drahtelemente 80 vorgesehen.

Die Drahtelemente 80 weisen Biegungen 86 auf. Die Drahtelemente 80 verlaufen somit nur abschnittsweise parallel zueinander. Durch die hier gezeigte Anordnung der Drahtelemente 80 mit besagten Biegungen 86 werden innerhalb der zweiten Verteilstruktur 60 zwischen den Drahtelementen 80 Kanäle mit variierenden Breiten ausgebildet.

Dabei entstehen erste Strömungsbereiche 91, welche eine verhältnismäßig geringe Breite aufweisen. Es entstehen auch zweite Strömungsbereiche 92, welche eine im Vergleich zu den ersten Strömungsbereichen 91 größere Breite aufweisen.

Im Betrieb der Brennstoffzelle 2, wenn das Oxidationsmittel durch die zweite Verteilstruktur 60 strömt, hat das Oxidationsmittel in den ersten Strömungsbereichen 91 eine höhere Strömungsgeschwindigkeit als in den zweiten Strömungsbereichen 92. Ferner hat das Oxidationsmittel in den ersten Strömungsbereichen 91 einen geringeren Druck als in den zweiten Strömungsbereichen 92.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Gasverteilerplatte (40) für eine Brennstoffzelle (2), umfassend eine erste Verteilstruktur (50) zur Verteilung eines Brennstoffs an eine erste Elektrode (21) und eine zweite Verteilstruktur (60) zur Verteilung eines Oxidationsmittels an eine zweite Elektrode (22),
**dadurch gekennzeichnet, dass**
in der zweiten Verteilstruktur (60) mindestens zwei Drahtelemente (80) vorgesehen sind, wobei diese Biegungen (86) aufweisen und dadurch innerhalb der zweiten Verteilstruktur (60) zwischen den Drahtelementen (80) Kanäle mit variierenden Breiten ausgebildet sind, wobei die Verteilstruktur (50, 60) von einer Trennplatte (75, 76) begrenzt ist, welche mit den Drahtelementen (80) stoffschlüssig verbunden ist.

2. Gasverteilerplatte (40) nach Anspruch 1, **dadurch gekennzeichnet, dass** die Drahtelemente (80) einen runden Querschnitt aufweisen.

3. Gasverteilerplatte (40) nach einem der vorstehenden Ansprüche,
**dadurch gekennzeichnet, dass**
die Drahtelemente (80) aus einem metallischen Stoff gefertigt sind.

4. Gasverteilerplatte (40) nach einem der vorstehenden Ansprüche,
**dadurch gekennzeichnet, dass**
die Drahtelemente (80) eine nanostrukturierte und/oder mikrostrukturierte Oberfläche aufweisen.

5. Gasverteilerplatte (40) nach einem der vorstehenden Ansprüche,
**dadurch gekennzeichnet, dass**
die Drahtelemente (80) mit einer Ummantelung (82) versehen sind.

6. Gasverteilerplatte (40) nach Anspruch 1, **dadurch gekennzeichnet, dass** die Drahtelemente (80) und die Trennplatte (75, 76) mit einer gemeinsamen Beschichtung (84) versehen sind.

7. Brennstoffzelle (2), umfassend
mindestens eine Membran-Elektrodeneinheit (10) mit einer ersten Elektrode (21) und einer zweiten Elektrode (22), welche voneinander durch eine Membran (18) getrennt sind, und
mindestens eine Gasverteilerplatte (40) nach einem der vorstehenden Ansprüche.

## Claims

1. Gas distributor plate (40) for a fuel cell (2), comprising a first distributing structure (50) for distributing a fuel to a first electrode (21) and a second distributing structure (60) for distributing an oxidant to a second electrode (22),
**characterized in that**
at least two wire elements (80) are provided in the second distributing structure (60), wherein said elements have bends (86) and channels of varying widths are thereby formed between the wire elements (80) within the second distributing structure (60), wherein the distributing structure (50, 60) is delimited by a dividing plate (75, 76) which is joined to the wire elements (80) by an atomic-level join.

2. Gas distributor plate (40) according to Claim 1, **characterized in that**
the wire elements (80) have a round cross section.

3. Gas distributor plate (40) according to either of the preceding claims,
**characterized in that**
the wire elements (80) are fabricated from a metallic material.

4. Gas distributor plate (40) according to any of the preceding claims,
**characterized in that**
the wire elements (80) have a nanostructured and/or microstructured surface.

5. Gas distributor plate (40) according to any of the preceding claims,
**characterized in that**
the wire elements (80) are provided with a sheathing (82) .

6. Gas distributor plate (40) according to Claim 1, **characterized in that**
the wire elements (80) and the dividing plate (75, 76) are provided with a common coating (84).

7. Fuel cell (2) comprising
at least one membrane-electrode unit (10) having a first electrode (21) and a second electrode (22) which are separated from one another by a membrane (18) and
at least one gas distributor plate (40) according to any of the preceding claims.

## Revendications

1. Plaque de distribution de gaz (40) destinée à une pile à combustible (2), ladite plaque comprenant une première structure de distribution (50) destinée à distribuer un combustible à une première électrode (21) et une deuxième structure de distribution (60) destinée à distribuer un agent oxydant à une deuxième électrode (22), **caractérisée en ce que**
au moins deux éléments filaires (80) sont prévus dans la deuxième structure de distribution (60), ceux-ci comportant des coudes (86) et des canaux de largeurs variables étant ainsi formés à l'intérieur de la deuxième structure de distribution (60) entre les éléments filaires (80), la structure de distribution (50, 60) étant délimitée par une plaque de séparation (75, 76) qui est reliée par une liaison de matière aux éléments filaires (80).

2. Plaque de distribution de gaz (40) selon la revendication 1, **caractérisée en ce que** les éléments filaires (80) ont une section transversale ronde.

3. Plaque de distribution de gaz (40) selon l'une des revendications précédentes, **caractérisée en ce que** les éléments filaires (80) sont fabriqués à partir d'une matière métallique.

4. Plaque de distribution de gaz (40) selon l'une des revendications précédentes, **caractérisée en ce que** les éléments filaires (80) comportent une surface nano-structurée et/ou micro-structurée.

5. Plaque de distribution de gaz (40) selon l'une des revendications précédentes, **caractérisée en ce que** les éléments filaires (80) sont pourvus d'une gaine (82).

6. Plaque de distribution de gaz (40) selon la revendication 1, **caractérisée en ce que** les éléments filaires (80) et la plaque de séparation (75, 76) sont munis d'un revêtement commun (84).

7. Pile à combustible (2), comprenant
au moins une unité membrane-électrode (10) pourvue d'une première électrode (21) et d'une deuxième électrode (22) qui sont séparées l'une de l'autre par une membrane (18), et
au moins une plaque de distribution de gaz (40) selon l'une des revendications précédentes.
